# EUROPÄISCHE PATENTSCHRIFT

(11) **EP 0 384 024 B1**
(45) Veröffentlichungstag und Bekanntmachung des Hinweises auf die Patenterteilung: **17.08.1994**
(21) Anmeldenummer: 89123274.6
(22) Anmeldetag: 15.12.1989
(51) Int. Cl.: H04M 3/36

(54) **Verfahren zum Kategorisieren und Registrieren von sich aus Fernsprechverbindungen ergebenden Informationen**
Process for categorising and registering information arising from telephone connections
Procédé pour classifier et enregistrer des informations provenant de connexions téléphoniques

(30) Priorität: 21.02.1989 DE 3905258
(43) Veröffentlichungstag der Anmeldung: 29.08.1990
(73) Patentinhaber: TELENORMA GMBH, 60326 Frankfurt am Main (DE)
(72) Erfinder: Hutt, Hans-Ulrich, D-7336 Uhingen (DE); Bühler, Udo, D-7336 Uhingen (DE)

(56) Entgegenhaltungen:
- DE-A- 2 809 699
- GB-A- 2 185 661
- US-A- 3 806 669
- JAPAN TELECOMMUNICATION REVIEW. vol. 7, no. 4, 1965, TOKYO JP Seiten 191 - 196;T. Suzuki et al: "Network Management Equipment"
- ERICSSON REVIEW. vol. 60, no. 2, 1983, STOCKHOLM SE Seiten 66 - 72; L-E Morell:"Operator Position Subsystem in AXE 10"
- Proceedings of the International Switching Symposium, 25-29 Okt., 1976, Tokyo,JP. Seiten 1 - 8; K. Takeuchi et al: "Implementation of the Man-MachineInterface in the XE-1 SPC International Telephone Switching System"

## Beschreibung

Die Erfindung betrifft ein Verfahren zum Kategorisieren und Registrieren von sich aus Fernsprechverbindungen ergebenden Informationen nach dem Oberbegriff des Patentanspruchs 1.

Bei Vermittlungsanlagen, insbesondere Fernsprechnebenstellenanlagen ist es bekannt, den Anschlußorganen verschiedene Berechtigungsklassen zuzuordnen. Diese Maßnahme dient meistens dazu, das selbstständige Aufbauen von gebührenpflichtigen Fernverbindungen einzuschränken, um die Telefonkosten auf ein erträgliches Maß zu reduzieren. Mit der Zuteilung von Berechtigungen kann dem Benutzer eines Fernsprechendgerätes die Möglichkeit gegeben werden, bestimmte Dienste, wie z. B. Aufschalten, Ruhe vor dem Telefon usw. in Anspruch zu nehmen.

Es ist außerdem bekannt, für das Auslösen von Verbindungen besondere Steuerprozeduren vorzusehen. In der DE-A 35 34 680 ist eine Schaltungsanordnung für das Auslösen von Verbindungen in zentral gesteuerten Fernmelde-, insbesondere Fernsprechvermittlungsanlagen beschrieben. Die Aufgabe der dort beschriebenen Schaltungsanordnung besteht darin, bei Auslösevorgängen die Belegungszeit der zentralen Steuereinrichtung drastisch zu reduzieren, damit ihre Leistungsfähigkeit erhöht werden kann. Es ist allgemein üblich, beim Auslösen einer Verbindung die daran beteiligten Anschlußorgane und Verbindungswege sofort freizuschalten, damit diese für eine neue Verbindung wieder zur Verfügung stehen. Durch die in der DE-A 35 34 680 beschriebene Schaltungsanordnung wird erreicht, daß Teile von Verbindungswegen in einem übergeordneten Koppelfeld nicht sofort freigeschaltet werden, sondern belegt bleiben, bis Auslösemeldungen gesammelt an die zentrale Steuereinrichtung übergeben werden. Diese Maßnahme hat jedoch keinen Einfluß auf die Freigabe von Anschlußorganen beim Auslösen einer Verbindung.

Aus der britischen Offenlegungschrift GB-A-2 185 661 ist ein Informationsübertragungs- und -verarbeitungsverfahren bekannt, wobei die einzelnen Informationsarten vom Benutzer gekennzeichnet werden. Da zum Verbindungsaufbau Fernsprechendgeräte auch für das Herstellen von Verbindungen zu anderen über einen Fernsprechanschluß betriebenen Endgeräten benutzt werden, müssen den Verbindungen sogenannte Transaktions-Daten hinzugefügt werden. Diese Informationen werden benötigt, um das gewünschte Endgerät anzusteuern. Darüber hinaus können weitere eine Verbindung betreffende Daten von einem Benutzer hinzugefügt werden, die zentral verarbeitet werden können. Dabei kann es sich um Benutzeridentifizierungen, Zeitdaten und Kostendaten handeln.

Mit den Transaktions-Daten oder anderen den Verbindungen hinzugefügten Informationen kann kein Einfluß auf die Verbindung selbst ausgeübt werden. Insbesondere das Auslösen einer Verbindung und das Freischalten des Endgerätes ist nicht von derartigen Daten abhängig. Damit ist es nach dem Trennen einer Verbindung und dem Freischalten des Endgerätes nicht mehr möglich, noch fehlende Daten einer Verbindung zuzuordnen.

Die Aufgabe der vorliegenden Erfindung besteht darin, ein Verfahren anzugeben, womit das Freischalten eines Anschlußorgans abhängig gemacht werden kann von der Eingabe besonderer Kennzeichnungen. Mit diesen Kennzeichnungen soll dem Inhalt eines Telefongespräches entsprechend festgehalten werden, wie oft beispielsweise jeweils gleichartige Beschwerden vorgetragen, gleichartige Störungsmeldungen abgegeben oder sonstige Meldungen abgegeben werden, welche in Kategorien einordenbar sind. Diese Kennzeichnungen sollen gesammelt und statistisch ausgewertet werden können.

Diese Aufgabe wird durch ein Verfahren gelöst, wie es im Patentanspruch 1 angegeben ist.

Damit wird in vorteilhafter Weise erreicht, daß mit einem relativ geringen Aufwand an zentraler Stelle über die Fernsprechvermittlungsanlage wertvolle Informationen gesammelt werden können. Die in den Unteransprüchen angegebenen Weiterbildungen der Erfindung dienen zur Verbesserung der Wirkungsweise des Verfahrens und zur Anpassung an betriebliche Gegebenheiten.

Ein Ausführungsbeispiel der Erfindung wird nachfolgend anhand einer Zeichnung naher erläutert. Die schematisch dargestellte Vermittlungsanlage VA weist Anschlußorgane AO1 -AOn auf, woran Endgeräte EG1 - EGn angeschlossen sind. Außerdem gibt es Übertragungen UE, um Externleitungen anzuschließen für Verbindungen mit anderen Vermittlungsanlagen und dem öffentlichen Fernsprechnetz.

Es sei angenommen, daß einem Anschlußorgan, z. B. AO1 eine besondere Berechtigung zugeteilt worden ist, weil dort Verbindungen ankommen, die ihrem Nachrichteninhalt entsprechend in besonderer Weise registriert werden sollen. Die Steuerung ST der Vermittlungsanlage VA ist dann so eingestellt, daß beim Beenden eines Telefongespräches das Anschlußorgan AO1 nicht freigeschaltet wird, wenn nicht ein besonderes Kennzeichen vom Endgerät EG1 aus eingegeben wird. Dieses Merkmal kann je nach den betrieblichen Forderungen so ausgestaltet werden, daß es beispielsweise nur bei ankommenden Externverbindungen wirksam ist. Wenn eine derartige Verbindung besteht, so wird dies in der Anzeigeeinrichtung AE1 dargestellt mit einem besonderen Hinweis, daß eine Kennzeichnung einzugeben ist. Diese Kennzeichnung besteht beispielsweise aus zwei mit dem Wählorgan einzugebenden Ziffern, welche von der Steuerung ST der Vermittlungsanlage VA aufgenommen und an eine besondere Steuereinrichtung SE weitergegeben werden. Es wird damit ein Speicher SP adressiert, um zu bewirken, daß ein bereits eingespeicherter Wert um eine Einheit erhöht wird. Auf diese Weise wird erreicht, daß am Ende eines zur Registrierung vorgesehenen Zeitraumes mehrere Summenwerte zur Verfügung stehen. Diese Summenwerte können dann einzeln oder insgesamt abgefragt werden und liefern Aussagen darüber, wie oft Nachrichten jeweils gleichen Inhaltes entgegengenommen wurden.

Für die Ausgabe der im Speicher SP abgelegten Informationen ist im einfachsten Fall eine Druckerschnittstelle vorgesehen, so daß ein Drucker die Werte direkt ausdrucken kann. Es kann jedoch auch vorgesehen werden, eine Datenverarbeitungsanlage anzuschließen, wobei eine besondere Auswertung der Daten mit weiteren Ergänzungen und Erläuterungen möglich ist.

Bei den im Speicher SP abgelegten Informationen kann es sich um die jeweilige Anzahl von Beschwerden, Störungsmeldungen, offizielle Mitteilungen usw. handeln, die von einer dazu eingerichteten Stelle entgegengenommen werden. Das dafür eingesetzte Endgerät EG1 wird dann über das besonders berechtigte Anschlußorgan AO1 in Durchwahl angerufen. Die Bedienungsperson gibt dann aufgrund des Gesprächsinhalts eine dazu gehörige Kennzeichnung während des Gesprächs oder an dessen Ende ein. Falls es keine Anhaltspunkte gibt die für eine Registrierung und Kategorisierung vorgesehen ist, z. B. Privatgespräch, so kann z. B. das Kennzeichen 00 eingegeben werden, damit das Anschlußorgan AO1 wieder freigeschaltet wird.

In der Steuereinrichtung SE, welche für das Einschreiben und Auslesen des Speichers SP zuständig ist, sind Logikanordnungen vorgesehen, welche nach einem Druckvorgang oder nach dem Ende eines Zeitraumes eine Löschung des Speicherinhaltes bewirken. Bei der Auswertung kann dann von Ausdruck zu Ausdruck oder für einen bestimmten Zeitraum getrennt ausgeworfen werden, wie viele Kennzeichnungen jeweils einer bestimmten Kategorie vorgelegen haben. Bei der Auswertung durch eine Datenverarbeitungsanlage können Grafiken erstellt werden, so daß ersichtlich ist, in welcher Häufigkeit die Kennzeichnungen der einzelnen Kategorien aufgetreten sind. Dabei lassen sich zusätzliche Erläuterungen angeben, so daß es nicht nötig ist zur Interpretation eine Liste zu benutzen.

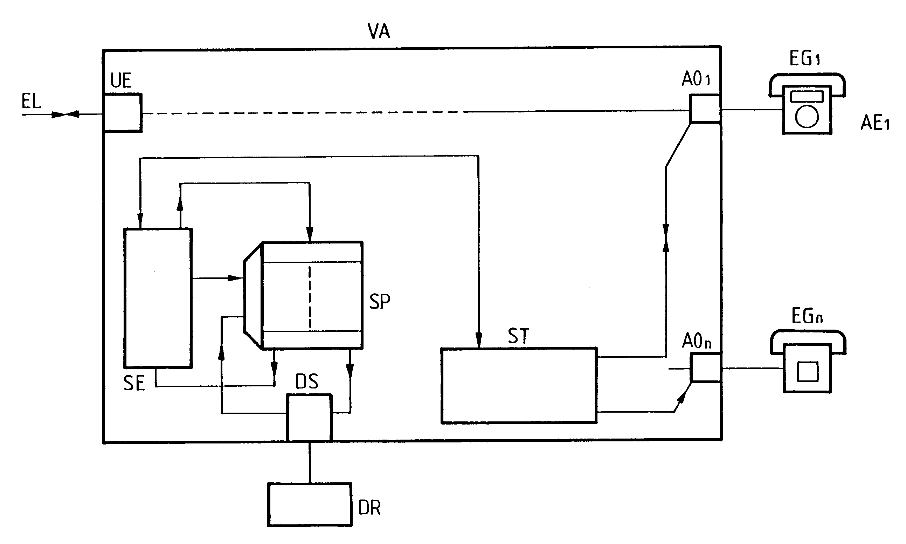

## Patentansprüche

1. Verfahren zum Kategorisieren und Registrieren von sich aus Fernsprechverbindungen ergebenden Informationen bei Fernsprechvermittlungsanlagen mit zentralen oder dezentralen Steuerungen und mit unterschiedliche Berechtigungen aufweisenden Anschlußorganen,
**dadurch gekennzeichnet,**
daß bei einer einem Anschlußorgan (z. B. AO1) zugeordneten besonderen Berechtigungsklasse das Freischalten dieses Anschlußorgans (AO1) beim Auslösen einer Verbindung erst dann ermöglicht wird, wenn vom Endgerät (EG1) aus vorgegebene, den Gesprächsinhalt betreffende Kennzeichnungen zur Vermittlungsanlage (VA) abgegeben wurden,
daß derartige Kennzeichnungen in einem besonderen Speicher (SP) abgelegt und jeweils gleichartige Kennzeichnungen gezählt werden, so daß dieser Speicher für eine statistische Auswertung ausgelesen werden kann,
und daß im Endgerät (EG1) eine Anzeige erscheint, welche den Benutzer zur Eingabe von Kennzeichnungen auffordert.

2. Verfahren nach Anspruch 1,
dadurch gekennzeichnet,
daß die Kennzeichnung aus einer zweistelligen Nummer besteht, die mit dem Wählorgan einzugeben ist.

3. Verfahren nach Anspruch 1,
dadurch gekennzeichnet,
daß die Kennzeichnung schon während der bestehenden Verbindung eingegeben werden kann.

4. Verfahren nach Anspruch 1,
dadurch gekennzeichnet,
daß die Kennzeichnung nach dem Auslösen der Verbindung eingegeben werden kann.

5. Verfahren nach Anspruch 1,
dadurch gekennzeichnet,
daß die Freigabe des Anschlußorgans bei bestimmten Verbindungsarten auch ohne Eingabe einer Kennzeichnung möglich ist.

6. Verfahren nach Anspruch 1,
dadurch gekennzeichnet,
daß die Abhängigkeit der Auslösung von der Eingabe einer Kennzeichnung nur bei bestimmten Verbindungsarten, z. B. nur bei ankommenden Externgesprächen, wirksam ist.

7. Verfahren nach Anspruch 1,
dadurch gekennzeichnet,
daß eine Schnittstelle (DS) vorgesehen ist, woran ein Drucker angeschlossen werden kann, um den Inhalt des Speichers (SP) auszudrucken.

8. Verfahren nach Anspruch 1,
dadurch gekennzeichnet,
daß der Inhalt des Speichers an eine Datenverarbeitungsanlage zur weiteren Verarbeitung abgegeben werden kann.

## Claims

1. Method of categorising and registering information, which arises from telephone connections, in telephone exchanges with centralised or decentralised controls and with connection elements having different authorisations, characterised thereby that for one particular class of authorisation associated with a connecting element (for example AO1) the switching free of this connecting element (AO1) is made possible on disconnecting of a connection only if predetermined identifications concerning the call content were delivered by the terminal apparatus (EG1) to the exchange (VA), that identifications of that kind are filed in a separate store (SP) and similar identifications are counted each time so that this store can be read out for a statistical evaluation, and that an indication, which requests the user to input identifications, appears in the terminal apparatus (EG1).

2. Method according to claim 1, characterised thereby that the identification consists of a two-digit number, which is input by the dialling device.

3. Method according to claim 1, characterised thereby that the indentification can be input even during the existing connection.

4. Method according to claim 1, characterised thereby that the identification can be input after the disconnecting of the connection.

5. Method according to claim 1, characterised thereby that the freeing, of the connecting element is possible with certain kinds of connection even without input of an identification.

6. Method according to claim 1, characterised thereby that the dependence of the disconnecting on the input of an identification is effective only with certain kinds of connection, for example only with arriving outside calls.

7. Method according to claim 1, characterised thereby that an interface (DS) is provided, to which a printer can be connected in order to print out the content of the store (SP).

8. Method according to claim 1, characterised thereby that the content of the store can be delivered to a data process installation for further processing.

## Revendications

1. Procédé pour classifier et enregistrer des informations provenant de connexions téléphoniques concernant des installations de commutation téléphoniques ayant des commandes centrales ou indépendantes et des organes de raccordement présentant des autorisations différentes,
caractérisé
en ce que pour une classe d'autorisation particulière associée à un organe de raccordement (par exemple A01), la déconnexion de cet organe de raccordement (AO1) lors de la libération d'une connexion n'est possible que si des identifications prédéfinies provenant du dispositif terminal (EG1) et concernant la teneur de la conversation ont été transmises à l'installation de commutation (VA),
en ce que de telles identifications sont classées dans une mémoire particulière (SP) et que respectivement des identifications du même genre sont comptées, de sorte que cette mémoire peut être analysée pour une évaluation statistique,
et en ce qu'une indication apparaît dans le dispositif terminal (EG1), demandant à l'utilisateur d'introduire des identifications.

2. Procédé selon la revendication 1, caractérisé en ce que l'identification comprend un nombre à deux chiffres, qui doit être introduit avec l'organe de sélection.

3. Procédé selon la revendication 1, caractérisé en ce que l'identification peut être introduite déjà pendant la connexion existante.

4. Procédé selon la revendication 1, caractérisé en ce que l'identification peut être introduite après la libération de la connexion.

5. Procédé selon la revendication 1, caractérisé en ce que le déblocage de l'organe de raccordement pour des types de connexion déterminés est possible également sans introduire une identification.

6. Procédé selon la revendication 1, caractérisé en ce que la libération ne dépend effectivement de l'introduction d'une identification que pour certains types de connexions, par exemple seulement pour des conversations externes arrivantes.

7. Procédé selon la revendication 1, caractérisé en ce qu'une interface (DS) est prévue, à laquelle une imprimante peut être raccordée pour imprimer le contenu de la mémoire (SP).

8. Procédé selon la revendication 1, caractérisé en ce que le contenu de la mémoire se trouvant dans une installation de traitement de données peut être transmis pour un autre traitement.
